# EUROPEAN PATENT APPLICATION

(11) **EP 4 475 342 A1**
(43) Date of publication of application: **11.12.2024**
(21) Application number: 24179964.2
(22) Date of filing: 04.06.2024
(51) Int. Cl.: H01R 4/34, H01R 11/26, H01R 13/44

(54) **HIGH CURRENT CONNECTOR AND MODULE CONNECTOR SYSTEM WITH SUCH A HIGH CURRENT CONNECTOR**

(30) Priority: 05.06.2023 DE 102023114718
(71) Applicant: TE Connectivity Solutions GmbH, 8200 Schaffhausen (CH)
(72) Inventor: WOLF, Marcus, 64625 Bensheim (DE); HUBER, Jens, 64625 Bensheim (DE); HOFFMANN, Bjoern, 64625 Bensheim (DE); BUCHHOLZ, Ron, 64625 Bensheim (DE); WEBER, Alexander, 64625 Bensheim (DE); SCHAEFER, Maik, 64625 Bensheim (DE); EHEIM, Manuel, 64625 Bensheim (DE); DISTLER, Patrick, 64625 Bensheim (DE)
(74) Representative: Patentanwaltskanzlei WILHELM & BECK

(57) **Abstract**

The invention relates to a high current connector (10) and to a module connector system (5), wherein the high current connector (10) comprises a housing (15), a screw (20) and a screw head cover (35); wherein the screw (20) extends along a screw axis (45) and has a screw head (150); wherein the housing (15) has a first receptacle (105) which extends along the screw axis (45) and has a receptacle opening (120); wherein the screw head (150) and the screw head cover (35) are arranged in the first receptacle (105); wherein the screw head cover (35) on a side that faces the receptacle opening (120) covers the screw head (150) and electrically isolates the screw (20) at least in portions; wherein the screw head cover (35) has a cover portion (160) which extends outwards in the radial direction, and a support portion (165) which is arranged radially outside on the cover portion (160) and extends about the screw axis (45); wherein the first receptacle (105) has a receptacle internal wall (110) that faces the support portion (165), and the support portion (165) has an outer circumferential side (170); wherein the support portion (165) by way of the outer circumferential side (170) rests against the receptacle internal wall and supports the screw (20) in the radial direction.

## Description

The invention relates to a high current connector according to Claim 1, and to a modular connector system according to Claim 11.

A touch-protected screw connection device is known from WO 2022/242980 A1.

The object of the invention is to provide an improved high current connector and an improved module connector system.

This object is achieved by means of a high current connector according to Claim 1, and by a module connector system according to Claim 11. Advantageous embodiments are set forth in the dependent claims.

It has been recognized that an improved high current connector, in particular an improved module connector for vehicles with an electric drive, can be provided in that the high current connector has a housing, a screw and a screw head cover. The screw extends along a screw axis and has a screw head. The housing has a first receptacle which extends along the screw axis and has a receptacle opening extending. The screw head and the screw head cover are arranged in the first receptacle. The screw head cover on a side that faces the receptacle opening covers the screw head and electrically isolates the screw at least in portions. The screw head cover has a cover portion which extends outwards in the radial direction, and a support portion which is arranged radially outside on the cover portion and extends about the screw axis. The first receptacle has a receptacle internal wall that faces the support portion, and the support portion has an outer circumferential side, wherein the support portion by way of the outer circumferential side rests against the receptacle internal wall and supports the screw in the radial direction.

This design embodiment has the advantage of preventing the screw from tilting about an axis perpendicular to the screw axis. In the process, the support portion runs or impacts against the receptacle internal wall. The support portion, which is arranged radially outside and extends in the axial direction in the direction of the receptacle opening, ensures an early impact on the first receptacle, so that a tilting angle about the axis perpendicular to the screw axis can be kept to a minimum. As a result, a radial position of a finger protection cap, which is also arranged on the screw on a side that faces away from a screw head, can be established. The finger protection cap ensures touch protection of current/voltage-conducting components on the high current connector.

It is particularly advantageous when the screw is movable along the screw axis between a contact position and a transport position, wherein, for guiding the screw between the contact position and the transport position in the radial direction relative to the screw axis, the outer circumferential side of the support portion and the receptacle internal wall rest against one another at least in portions. In particular, it can be prevented as a result that, when the screw is screwed into a further high current connector of the module connector system, the screw twists or unintentionally tilts in the further high current connector.

In a further embodiment, the support portion extends away from the cover portion in the direction of the receptacle opening. This design embodiment ensures that the tilting angle is further reduced.

In a further embodiment, the cover portion has a convexity and a disc region that adjoins the convexity in the radially outwards direction. The disc region is radially on the inside connected to the convexity and radially on the outside connected to the support portion. The convexity extends in a direction of the receptacle opening. A first radial gap is arranged between the convexity and the support portion. This design embodiment has the advantage that a tool for tightening the screw, for example a socket, can be inserted into the first radial gap.

In a further embodiment, the support portion is formed to be hollow-cylindrical. The receptacle internal wall is moulded on a circular path so as to run about the screw axis. This design embodiment ensures reliable guiding of the screw.

In a further embodiment, the high current connector has a first high current contact which is arranged so as to be spaced apart from the receptacle opening. Furthermore, the housing has a collar, wherein the collar is arranged on a side of the housing that faces away from the first high current contact. The receptacle opening adjoins the collar radially on the inside. The collar has a first detent face on a side that faces the first high current contact. The support portion on the end side has a second detent face that faces away from the first high current contact. As a result, axial travel of the screw is delimited by impacting the second detent face on the first detent face. In addition, any unintentional loss of the screw cover and/or the screw is thereby avoided.

In a further embodiment, the high current connector has a touch protection housing portion which is arranged so as to be axially offset from the first receptacle. The first high current contact is arranged in the touch protection housing portion. The touch protection housing portion protrudes beyond the first high current contact in the axial direction.

The screw has a screw shank which on a first axial side is connected to the screw head. The screw shank penetrates a second passage opening of the first high current contact in the axial direction. A finger protection cap with an electrically non-conductive material is arranged on a second axial side of the screw shank that faces away from the screw head. This design embodiment has the advantage that a second annular gap can be established in a defined manner by the finger protection cap and the touch protection housing portion, no finger being able to be introduced up to the first high current contact through said second annular gap. In particular, unintentional tilting and thus widening of the second annular gap on account of the support portion impacting on the first housing in the first receptacle is avoided by the support portion when the finger is introduced into the second annular gap.

In a further embodiment, the touch protection housing portion on a side that faces away from the screw head protrudes beyond the finger protection cap when the first detent face rests on the second detent face. The finger protection cap can also protrude beyond the touch protection housing portion when the screw is screwed into a further high current connector. By recessing the finger protection cap in the transport position, any unintentional impact of the finger protection cap, and possibly unintentional detachment of the finger protection cap, is avoided.

In a further embodiment, the high current connector has a latching device, wherein the latching device has a latching spring and a latching element. The latching spring is arranged on the support portion, and the latching element is arranged on the first receptacle. In the transport position of the screw, the latching spring engages behind the latching element and secures the screw in the transport position. This design embodiment has the advantage that unintentional slipping while transporting the screw head cover and the screw connected thereto can be reliably avoided on account of the latching device.

It is particularly advantageous when the cover portion and the support portion are made in a materially integral manner in a single piece from an electrically non-conductive material. It is particularly expedient for the screw head cover to be produced, for example, by means of an injection-moulding method.

An improved module connector system can be provided in that the module connector system has a high current connector, which is designed as described above, and a further high current connector. The further high current connector has a second high current contact and a threaded bushing. The screw is screwed into the threaded bushing and for electrical contacting presses the first high current contact of the high current connector onto the second high current contact of the further high current connector.

The invention will be explained in more detail hereunder by means of figures, in which:
- Figure 1: shows a sectional view through a schematic module connector system;
- Figure 2: shows a fragment A, marked in Figure 1, of the high current connector shown in Figure 1, with a screw in a transport position;
- Figure 3: shows a fragment B, marked in Figure 1, of the high current connector shown in Figure 1;
- Figure 4: shows a fragment C, marked in Figure 3, of the high current connector shown in Figure 1;

- Figure 5: shows a perspective representation of a screw of a refinement of the high current connector shown in Figures 1 to 4; and
- Figure 6: shows a sectional view through the module connector system shown in Figure 1.

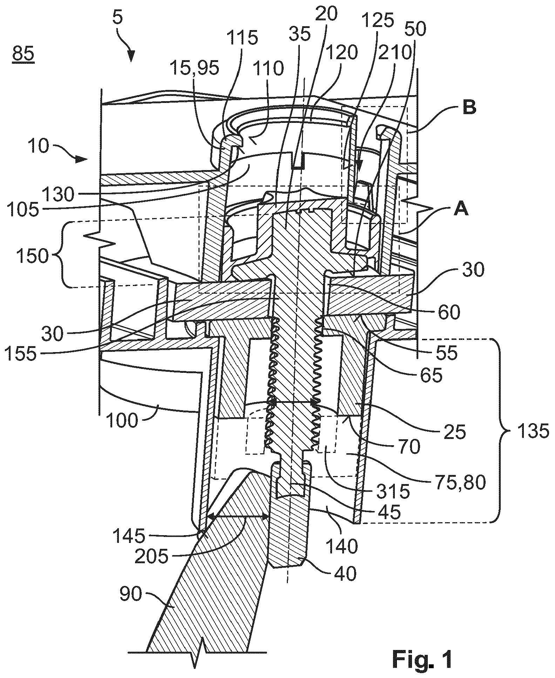

Figure 1 shows a sectional view through a module connector system 5.

The module connector system has at least one high current connector 10 and preferably a further high current connector 80. The high current connector 10 herein can be designed as a male high current connector 10 and/or in particular as a module connector. In Figure 1, the high current connector 10 is shown in a single arrangement. The high current connector 10 can also be formed in pairs or in a multiple arrangement.

The high current connector 10 shown in Figure 1 is designed for the electrical connection of an electrical energy store, in particular a high-voltage battery, of a vehicle with an electric drive. The geometric design of the high current connector 10 is discussed in particular hereunder.

The high current connector 10 has a housing 15, a screw 20, a first high current contact 25, an electrical conductor 30 and a screw head cover 35. In addition, the high current connector 10 can have a finger protection cap 40. The screw 20 extends along a screw axis 45, wherein reference is made hereunder to the screw axis in terms of the orientation of the components of the module connector system 5 relative to one other.

The electrical conductor 30 by way of example is made in a materially integral manner in a single piece from a board-shaped, electrically conducting material. In particular, the electrical conductor 30 can comprise, for example, aluminium and/or copper. The electrical conductor 30 is preferably designed for high current transmission. A high current herein is understood to be a transmission of an electrical current from 100 Amperes to 1000 Amperes, in particular 200 to 500 Amperes.

The electrical conductor 30 has a first conductor face 50 and a second conductor face 55 arranged opposite the first conductor face in the axial direction. A first passage opening 60 extends along the screw axis 45 between the first conductor face 50 and the second conductor face 55. The first passage opening 60 can be formed, for example, as a bore. For example, the electrical conductor 30 can be connected to a high current cable so as to be spaced apart from the first passage opening 60. The electrical conductor 30 can, for example, be electrically connected to an electrical energy store or drive motor.

The first high current contact 25 rests on the second conductor face 55. The first high current contact 25 is electrically connected to the electrical conductor 30. The first high current contact 25 herein can be arranged so as to be displaceable in the radial direction relative to the electrical conductor 30. The first high current contact 25, for example, has a substantially pot-shaped design. The first high current contact 25 herein has a second passage opening 65, which in the assembled state of the high current connector 10 is substantially co-aligned with the first passage opening 60.

Axially opposite the second conductor face 55, the first high current contact 25 has a first contact face 70. The first contact face 70 can be, for example, annular so as to be in a plane which is aligned to be inclined, in particular perpendicular, relative to the screw axis 45. The first contact face 70, in a contact position of the screw 20, is configured to electrically contact the first high current contact 25 and a second high current contact 75 of the further high current connector 80 of the module connector system 5. In the contact position, which is illustrated in Figure 1, the screw 20 is screwed into a threaded bushing 315 of the further high current connector 80.

The housing 15 has a first housing element 95 and preferably a second housing element 100. The first housing element 95 and the second housing element 100 can be conjointly connected. The housing 15 has an electrically non-conducting material.

The first housing element 95 is arranged on a side that faces the first conductor face 50, and has a first receptacle 105. The first receptacle 105 extends along the screw axis 45 and can be of a hollow-cylindrical design. The first housing element 95, preferably at one end of the receptacle 105, has a collar 115 which extends radially inwards. For example, a receptacle opening 120 of the first receptacle 105 adjoins the collar 115 radially on the inside.

A receptacle interior space 125 of the first receptacle 105 is delimited by a receptacle internal wall 110 in the radial direction. By way of example, the receptacle internal wall 110 herein is formed in the axial direction between the collar 115 and the first conductor face 50. The receptacle internal wall 110 can be led in a circular manner about the screw axis 45, for example. As a result of the arrangement of the collar 115, which is arranged so as to be axially spaced apart from the electrical conductor 30, the receptacle internal wall 110 has a larger inner diameter than the receptacle opening 120.

On an end side that faces the first high current contact 25, the collar 115 has a first detent face 130. The first detent face 130 can be, for example, of a planar design and extend in a plane perpendicular to the screw axis 45, for example.

Furthermore, the first detent face 130 can be arranged, for example, so as to run parallel to the first conductor face 50.

The second housing element 100 is arranged on a side that faces the second conductor face 55, and has a touch protection housing portion 135. The touch protection housing portion 135 is arranged so as to be axially offset from the first receptacle 105 and can be formed, for example, to be hollow-cylindrical and extend along the screw axis 45. The touch protection housing portion 135 encloses a second receptacle 140. The first high current contact 25 is arranged at least in portions in the second receptacle 140.

The touch protection housing portion 135, on a side that faces away from the electrical conductor 30 and from the high current contact 25, further has an end side 145 which is arranged, for example, so as to be in a plane that runs so as to be inclined, preferably perpendicularly, relative to the screw axis 45. The end side 145 herein is arranged so as to be axially spaced apart from the first contact face 70.

The screw 20 has a screw head 150 and a screw shank 155. The screw shank 155 on a first axial side is connected to the screw head 150. Preferably, the screw head 150 and the screw shank 155 herein can be designed in a materially integral manner in a single piece from a metallic material. An external thread is preferably arranged at least in portions on the screw shank 155.

The screw head 150 is arranged in the receptacle interior space 125 of the first receptacle 105 and rests in a compact position on the first conductor face 50. The screw head 150 herein is formed so as to be wider in the radial direction than the first and the second passage opening 60, 65. The screw shank 155 penetrates the first passage opening 60 and the second passage opening 65, and protrudes into the second receptacle 140. Furthermore, the first and/or the second passage opening 60, 65 are/is preferably formed so as to correspond to the screw shank 155.

For touch protection, the screw head cover 35 is arranged in the first receptacle 105 on a side of the screw 20 that faces the receptacle opening 120. The screw head cover 35 is preferably made of an electrically non-conductive material and mechanically fastened to the screw head 150. In particular, the cover portion 160 and the support portion 165 are made in a materially integral manner in a single piece from an electrically non-conductive material.

In particular, the screw head cover 35 and the screw head 150 can be co-rotationally connected to one another. Axially opposite the screw head 150, the finger protection cap 40 is arranged on the screw shaft 155 on a second axial side of the screw 20. The finger protection cap 40 is preferably designed to be cylindrical and mechanically connected to the screw shank 155.

In the contact position shown in Figure 1, the finger protection cap 40 protrudes beyond the end side 145 in the axial direction, and in the contact position thus protrudes from the second receptacle 140. The finger protection cap 40 is furthermore arranged so as to be axially spaced apart from the first contact face 70.

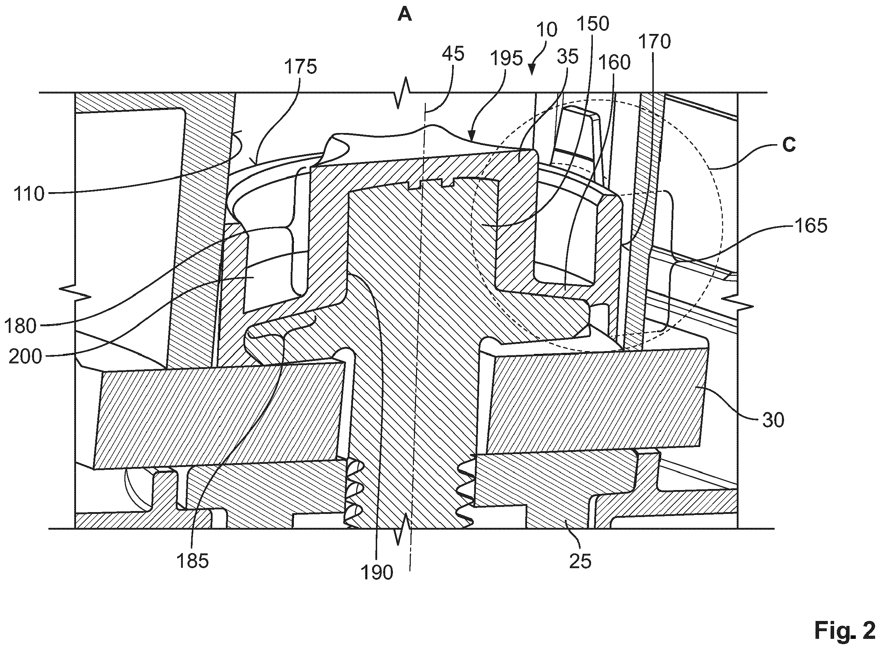

Figure 2 shows a fragment A, marked in Figure 1, of the high current connector 10 shown in Figure 1, with the screw 20 in a transport position.

The screw head cover 35 is arranged on a side that faces the receptacle opening 120 of the screw head 150, and covers the screw head 150. The screw head cover 35 also protrudes beyond the screw head 50 in the radial direction. As a result of the screw head cover 35, the screw head 150 is electrically isolated and protected against being touched.

The screw head cover 35 has a cover portion 160 which substantially extends outwards in the radial direction, and a support portion 165 which adjoins the cover portion 160 radially on the outside. For example, the support portion 165 runs substantially in a hollow-cylindrical manner about the screw axis 45, and extends in the axial direction from the cover portion 160 in the direction of the receptacle opening 120.

The support portion 165 has an outer circumferential side 170. On a side that faces the receptacle opening 120, the support portion 165 has a second detent face 175. The second detent face 175 herein can arranged in a plane so as to be inclined, preferably perpendicularly, relative to the screw axis 45. In the contact position (as illustrated in Figure 2), the first detent face 130 and the second detent face 175 are arranged so as to be spaced apart from one other in the axial direction relative to the screw axis 45. Further, the first detent face 130 and the second detent face 175 are arranged so as to radially overlap in the radial direction. A radial overlap herein is understood to mean that in the projection of two components in the axial direction along the screw axis 45, in a projection plane which runs perpendicularly to the screw axis 45, the two components, in the embodiment by way of example, the first detent face 130 and the second detent face 175, overlap one another in the projection plane.

The cover portion 160 has a convexity 180 and a disc region 185. The disc region 185 extends substantially radially outwards, while in contrast thereto the convexity 180 substantially protrudes beyond the disc region 185 in the axial direction. The disc region 185 herein is radially on the inside connected to the convexity 180.

On the axial side that faces the electrical conductor 30 and the first high current contact 25, the convexity 180 and the disc region 185 delimit a screw head receptacle 190, wherein the screw head 150 is co-rotationally connected to the screw head cover 35 at the convexity 180 in the screw head receptacle 190. Radially on the outside, a profile 195, for example a Torx profile, can be moulded on the convexity 180. The profile 195 serves the purpose of placing thereon a tool for introducing a tightening torque. The profile 195 is arranged circumferentially at the convexity 180.

The support portion 165 is arranged so as to be radially spaced apart from the convexity 180. A first radial gap 200 is provided herein between the convexity 180 and the support portion 165. In the embodiment, the support portion 165 and the convexity 180 are arranged so as to overlap axially at least in portions. An axial overlap herein is understood to mean that in the projection of two components in the radial direction, in a further projection plane in which the screw axis 45 runs, the two components in the further projection plane, in the embodiment by way of example, the convexity 180 and the support portion 165, overlap one another in the further projection plane.

In the embodiment, the first radial gap 200 is preferably chosen in such a manner that the tool can be inserted into the first radial gap 200 in order to tighten the screw 20 via the profile 195.

In the transport position of the screw 20, the screw head 150 is arranged so as to be spaced apart from the electrical conductor 30. However, in the process the screw shank 155 engages both in the electrical conductor 30 and in the first high current contact 25, whereby the finger protection cap 40 for example is arranged completely in the second receptacle 140. By way of example, the finger protection cap 40 herein no longer protrudes beyond the end side 145 of the touch protection housing portion 135 in the transport position. This design embodiment has the advantage that unintentional breaking or loosening of the finger protection cap 40 from the screw shank 155 can be avoided.

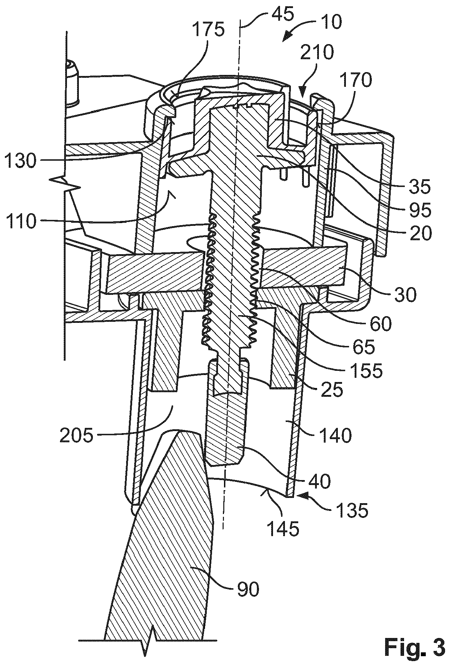

Figure 3 shows a fragment B, marked in Figure 1, of the high current connector 10 shown in Figure 1.

In the assembled state, the outer circumferential side 170 of the support portion 165 preferably rests against the receptacle internal wall 110. As a result thereof, any unintentional tilting of the screw 20 about an axis perpendicular to the screw axis 45 can be avoided by the touch contact. This ensures that a gap width of a second radial gap 205 between the finger protection cap 40 and the second receptacle 140 can be kept substantially constant.

Further, further tilting in the transport position can be prevented by the second detent face 175 impacting on the first detent face 130.

The second radial gap 205 in terms of its radial width is maintained regardless of whether the screw 20 is tightened or whether the screw 20 is in the non-assembled state in the housing 15 of the high current connector 10. The second radial gap 205 between the inside of the second receptacle 140 and the finger protection cap 40 ensures that any unintentional intrusion of a finger 90 up to a current-conducting part of the high current connector 10, in particular of the first high current contact 25 and/or a non-insulated region of the screw 20, in particular in the region of the screw shank 155, can be reliably avoided. The finger 90 herein can also be replaced with another object, for example a standardized test probe according to VDE.

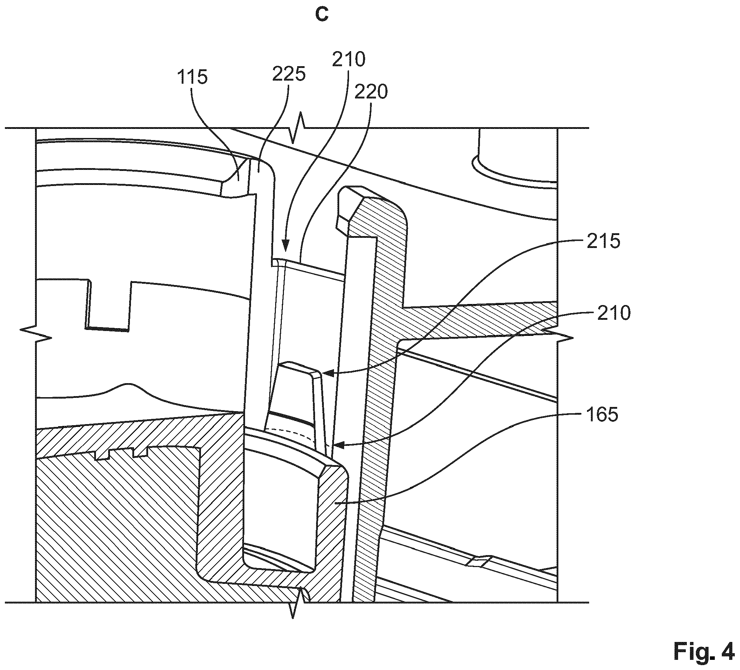

Figure 4 shows a fragment C, marked in Figure 3, of the high current connector 10 shown in Figure 1.

In addition, the high current connector 10 can have a latching device 210. The latching device 210 has, for example, a latching spring 215 and a latching element 220. The latching spring 215 can be arranged, for example, on the support portion 165 of the screw head cover 35. The latching element 220 can be arranged, for example, on the first housing element 95, for example, in the region of the receptacle internal wall 110. The receptacle internal wall 110 herein can have a recess 225. The latching element 220 can be arranged on the recess 225 which extends, for example, along the screw axis 45. The latching element 220 extends, for example, from the receptacle internal wall 110 outwards in the radial direction. In the contact position herein shown in Figures 1 to 3, for example, the latching device 210 is unlocked, and the latching spring 215 is thus arranged so as to be spaced apart from the latching element 220 in the axial direction. The recess 225 can extend, for example, in the longitudinal direction into the collar 115.

The latching spring 215 can be arranged, for example, radially on the outside of the support portion 165. Of course, it is also possible that the latching device 210, and likewise the recess 225, is dispensed with.

In Figure 4, the screw 20 is shown together with the screw head cover 35 between the contact position and the transposition in such a way that the latching device 210 is unlocked.

In the transport position (cf. Figure 2) the latching device 210 engages and secures the screw head cover 35 on the first housing element 95, so that any unintentional movement of the screw 20 along the screw axis 45 is prevented by impacting, and by the latching spring 215 engaging behind the latching element 220. It is avoided as a result that the finger protection cap 40 unintentionally protrudes beyond the end side 145, on the one hand, and any unintentional rattling back and forth and tilting of the screw shank 155 is additionally avoided in the first and second passage opening 60, 65, on the other hand.

The transport position is particularly suitable for transporting and assembling the high current connector 10, as this can prevent unintentional tilting, damage or impacting of the finger protection cap 40 and the screw 20.

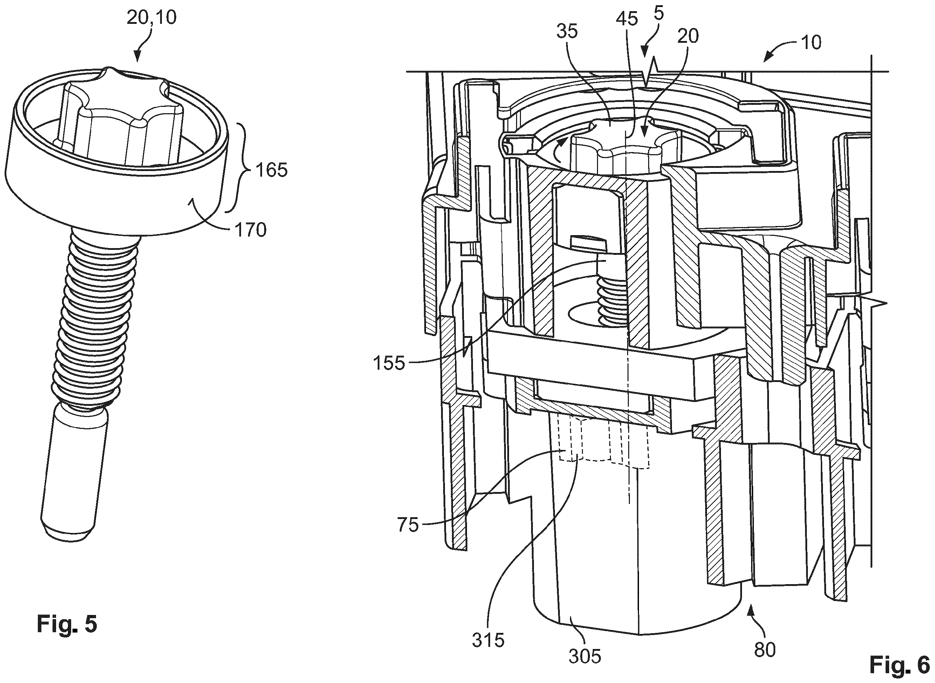

Figure 5 shows a perspective illustration of a screw 20 of a further development of the high current connector 10 shown in Figures 1 to 4.

The differences between the screw 20 shown in Figure 5 and the screw 20 of the high current connector 10 shown in Figures 1 to 4 are discussed exclusively hereunder.

In Figure 5, the latching device 210 is omitted by way of example in the refinement of the high current connector 10. Therefore, the outer circumferential side 170 is moulded so as to be substantially continuously cylindrical on the support portion 165.

Figure 6 shows a sectional view through the module connector system 5 shown in Figure 1.

The high current connector 10 and the further high current connector 80 are formed in a mutually corresponding manner. The further high current connector 80 herein has a further housing 305, a further electrical conductor 310, the second high current contact 75 and the threaded bushing 315. The threaded bushing 315 is inserted into the second high current contact 75, for example. The second electrical conductor is electrically connected to the second high current contact 75.

The threaded bushing 315 has an internal thread corresponding to the external thread of the screw shank 155, into which the screw 20 is screwed in the assembled state of the module connector system 5 shown in Figure 6.

For assembling, for example, the high current connector 10 is placed in the transport position on the further high current connector 80. The latching device 210 is thereafter preferably released and the screw 20 on the profile 195 is rotated about the screw axis 45 by introducing the tightening torque into the screw head cover 35, and screwed into the threaded bushing 315 by way of the screw shank 155. In the process, the screw head cover 35 and the outer circumferential side 170 are guided by resting against the receptacle internal wall 110, so that any unintentional tilting of the screw 20 can also be avoided when screwing the screw 20 into the threaded bushing 315. In particular, tilting of the screw 20 on the threaded bushing 315 can be avoided.

In the state screwed into the threaded bushing, the screw 20, by way of the screw head 150, presses the first high current contact 25 by way of the first contact face 70 against a second contact face of the second high current contact 75 of the further high current connector 80..

### List of reference signs

- 5: Module connector system
- 10: High current connector
- 15: Housing
- 20: Screw
- 25: First high current contact
- 30: Electrical conductor
- 35: Screw head cover
- 40: Finger protection cap
- 45: Screw axis
- 50: First conductor face
- 55: Second conductor face
- 60: First passage opening
- 65: Second passage opening
- 70: First contact face
- 75: Second high current contact
- 80: Further high current connector
- 85: Environment
- 90: Finger
- 95: First housing element
- 100: Second housing element
- 105: First receptacle
- 110: Receptacle internal wall
- 115: Collar
- 120: Receptacle opening
- 125: Receptacle interior space
- 130: First detent face
- 135: Touch protection housing portion
- 140: Second receptacle
- 145: End side
- 150: Screw head
- 155: Screw shank
- 160: Cover portion
- 165: Support portion
- 170: Outer circumferential side
- 175: Second detent face
- 180: Convexity
- 185: Disc region
- 190: Screw head receptacle
- 195: Profile
- 200: First radial gap
- 205: Second radial gap
- 210: Latching device
- 215: Latching spring
- 220: Latching element
- 225: Recess
- 305: Further housing
- 310: Further electrical conductor
- 315: Threaded bushing

## Claims

1. High current connector (10), in particular module connector for vehicles with an electric drive,
- wherein the high current connector (10) has a housing (15), a screw (20) and a screw head cover (35);
- wherein the screw (20) extends along a screw axis (45) and has a screw head (150);
- wherein the housing (15) has a first receptacle (105) which extends along the screw axis (45) and has a receptacle opening (120);
- wherein the screw head (150) and the screw head cover (35) are arranged in the first receptacle (105);
- wherein the screw head cover (35) on a side that faces the receptacle opening (120) covers the screw head (150) and electrically isolates the screw (20) at least in portions;
- wherein the screw head cover (35) has a cover portion (160) which extends outwards in the radial direction, and a support portion (165) which is arranged radially outside on the cover portion (160) and extends about the screw axis (45);
- wherein the first receptacle (105) has a receptacle internal wall (110) that faces the support portion (165), and the support portion (165) has an outer circumferential side (170);
- wherein the support portion (165) by way of the outer circumferential side (170) rests against the receptacle internal wall and supports the screw (20) in the radial direction.

2. High current connector (10) according to Claim 1,
- wherein the screw (20) is movable along the screw axis (45) between a contact position and a transport position;
- wherein, for guiding the screw (20) between the contact position and the transport position in the radial direction relative to the screw axis (45), the outer circumferential side (170) of the support portion (165) and the receptacle internal wall (110) rest against one another at least in portions.

3. High current connector (10) according to one of the preceding claims,
- wherein the support portion (165) extends away from the cover portion (160) in the direction of the receptacle opening (120).

4. High current connector (10) according to one of the preceding claims,
- wherein the cover portion (160) has a convexity (180) and a disc region (185) that adjoins the convexity (180) in the radially outwards direction;
- wherein the disc region (185) is radially on the inside connected to the convexity (180) and radially on the outside connected to the support portion (165);
- wherein the convexity (180) extends in a direction of the receptacle opening (120);
- wherein a first radial gap (200) is arranged between the convexity (180) and the support portion (165).

5. High current connector (10) according to one of the preceding claims,
- wherein the support portion (165) is formed to be hollow-cylindrical;
- wherein the receptacle internal wall (110) is moulded on a circular path so as to run about the screw axis (45).

6. High current connector (10) according to one of the preceding claims,
- wherein the high current connector (10) has a first high current contact (25) which is arranged so as to be spaced apart from the receptacle opening (120);
- wherein the housing (15) has a collar (115);
- wherein the collar (115) is arranged on a side of the housing (15) that faces away from the first high current contact (25);
- wherein the receptacle opening (120) adjoins the collar (115) radially on the inside;
- wherein the collar (115) has a first detent face (130) on the side that faces the first high current contact (25) ;
- wherein the support portion (165) on the end side has a second detent face (175) that faces away from the first high current contact (25).

7. High current connector (10) according to one of the preceding claims,
- wherein the high current connector (10) has a touch protection housing portion (135) which is arranged so as to be axially offset from the first receptacle (105);
- wherein the first high current contact (25) is arranged in the touch protection housing portion (135);
- wherein the touch protection housing portion (135) protrudes beyond the first high current contact (25)in the axial direction;
- wherein the screw (20) has a screw shank (155) which on a first axial side is connected to the screw head (150);
- wherein the screw shank (155) penetrates a second passage opening (65) of the first high current contact (25) in the axial direction;
- wherein a finger protection cap (40) with an electrically non-conductive material is arranged on a second axial side of the screw shank (155) that faces away from the screw head (150).

8. High current connector (10) according to Claim 7,
- wherein the touch protection housing portion (135) on a side that faces away from the screw head (150) protrudes beyond the finger protection cap (40) when the first detent face (130) rests on the second detent face (175).

9. High current connector (10) according to one of Claims 2 to 7,
- comprising a latching device (210),
- wherein the latching device (210) has a latching spring (215) and a latching element (220);
- wherein the latching spring (215) is arranged on the support portion (165), and the latching element (220) is arranged on the first receptacle (105);
- wherein in the transport position of the screw (20), the latching spring (215) engages behind the latching element (220) and secures the screw (20) in the transport position.

10. High current connector (10) according to one of the preceding claims,
- wherein the cover portion (160) and the support portion (165) are made in a materially integral manner in a single piece from an electrically non-conductive material.

11. Module connector system (5)
- having a high current connector (10) according to one of the preceding claims and a further high current connector (80),
- wherein the further high current module connector (80) has a second high current contact (75) and a threaded bushing (315);
- wherein the screw (20) is screwed into the threaded bushing (315) and for electrical contacting presses the first high current contact (25) of the high current connector (10) onto the second high current contact (75) of the further high current connector (80).
